# FASCICULE DE BREVET EUROPEEN

(11) **EP 0 299 859 B1**
(45) Date de publication et mention de la délivrance du brevet: **14.04.1993**
(21) Numéro de dépôt: 88401792.2
(22) Date de dépôt: 08.07.1988
(51) Int. Cl.: B62D 7/14

(54) **Dispositif de commande de direction arrière pour véhicule automobile à quatre roues directrices**
Hintenlenk-Steuervorrichtung für Fahrzeuge mit Vierradlenkung
Rear steering control device for a motor vehicle with four-wheel steering

(30) Priorité: 16.07.1987 FR 8710065; 09.05.1988 FR 8806226
(43) Date de publication de la demande: 18.01.1989
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, F-91390 Morsang s/Orge (FR); Barthelemy, André, F-78470 Saint Remy les Chevreuse (FR)
(74) Mandataire: Durand, Yves Armand Louis

(56) Documents cités:
- DE-A- 3 344 446
- FR-A- 2 445 257
- FR-A- 2 556 682
- FR-A- 2 566 360

## Description

La présente invention concerne un dispositif de commande de direction arrière notamment pour un véhicule automobile à quatre roues directrices.

Elle vise également un véhicule automobile équipé d'un tel dispositif.

Un tel dispositif doit pouvoir commander le braquage des roues arrière en fonction du braquage des roues avant imposé par le volant de direction du véhicule.

On sait que pour obtenir le meilleur comportement routier possible du véhicule dans les conditions ci-dessus définies, il est nécessaire de braquer les roues arrière dans le même sens que les roues avant pour une valeur d'angle de braquage du volant inférieure à une valeur de seuil prédéterminée et dans le sens opposé aux roues avant lorsque la valeur d'angle de braquage du volant dépasse la valeur de seuil. On obtient ainsi un effet survireur souhaitable du véhicule lorsque l'angle de braquage est relativement important par exemple lorsqu'on gare le véhicule dans un garage ou un parc de stationnement et un effet sous-vireur également souhaitable du véhicule lorsque l'angle de braquage est relativement petit comme c'est le cas lorsque le véhicule roule relativement rapidement.

Un dispositif satisfaisant aux conditions ci-dessus est par exemple décrit dans le brevet français N^{o} 2 556 682.

Toutefois, ce genre de dispositif présente l'inconvénient d'imposer par sa géométrie une loi de braquage qu'il n'est pas possible d'adapter au comportement du véhicule selon les observations et les résultats d'essais.

FR-A-2 445 257 décrit un dispositif de direction pour véhicule à quatre roues directrices comprenant les caractéristiques définies dans le préambule de la revendication 1.

Cependant, ce dispositif connu complique la structure du train avant du véhicule puisqu'il nécessite obligatoirement l'adjonction d'un prolongement 13b du bras articulé 13 portant l'une des roues avant 8. De plus, la tige de liaison 1 doit obligatoirement être également articulée à la plaque 3 du fait que l'articulation 14 de la tige de liaison 1 au prolongement de bras 13b ainsi que les extrémités de la barre de direction 5 décrivent des arcs de cercle lors de la rotation du volant 7. Le dispositif FR-A-2 445 257 comporte ainsi, entre la crémaillère de commande de braquage des roues avant 8 et les roues arrière 10 une série d'articulations impliquant nécessairement des jeux, rendant imprécis ce dispositif.

La présente invention a pour but de remédier aux inconvénients des dispositifs ci-dessus connus et permet en même temps au dispositif, pour le braquage des roues arrière, d'être d'une conception telle que la loi de braquage des roues arrière selon le braquage des roues avant peut être changée tout en ayant une structure d'une stabilité comparable à celle de la structure des directions mécaniques avant.

A cet effet, le dispositif de commande de direction arrière de l'invention, tel que défini dans le préambule de la revendication 1 est caractérisé en ce que le plateau est solidaire des barres de direction arrière et est guidé transversalement à l'axe longitudinal du véhicule dans le boîtier du mécanisme de direction arrière et la partie formant galet est entraînée par un arbre d'entraînement, monté rotatif dans le boîtier et accouplé à l'arbre de transmission tournant autour de son axe, et est accouplée à l'arbre d'entraînement par des moyens mécaniques du mécanisme de direction arrière transformant la rotation de l'arbre de transmission en un déplacement approprié de la partie formant galet de manière que cette dernière agisse par poussée sur la partie formant came pour déplacer ensemble le plateau et les barres de direction arrière transversalement à l'axe longitudinal du véhicule.

Selon une forme de réalisation de l'invention, le plateau est fixé de façon amovible aux barres de direction arrière par des vis de fixation accessibles par démontage d'un couvercle amoviblement fixé au boîtier du mécanisme de direction arrière.

Selon une autre forme de réalisation de l'invention, les moyens mécaniques de transformation précités comprennent trois pignons satellites angulairement équidistants reliés par un porte-satellites constitué de deux flasques centrés en rotation sur l'arbre d'entraînement précité disposé longitudinalement au véhicule et liés rigidement entre eux par trois axes respectivement des trois pignons satellites lesquels sont en prise à l'intérieur d'une couronne dentée fixe ; et au moins l'un des axes des pignons satellites est prolongé pour porter la partie formant galet de poussée précitée.

Selon encore une autre forme de réalisation de l'invention, le plateau précité comprend deux parties symétriques formant came et deux des axes des pignons satellites sont prolongés pour porter respectivement deux galets de poussée, l'un ou l'autre des galets de poussée étant en prise dans la partie formant came correspondante selon le sens de braquage des roues avant.

Selon toujours une autre forme de réalisation de l'invention, des moyens d'arrêt en rotation autour de leur axe de chacune des barres de direction arrière sont prévus.

Les moyens mécaniques de transformation précités comprennent un organe formant écrou monté sur une partie filetée de l'arbre d'entraînement disposé longitudinalement au véhicule et auquel est solidarisé un doigt portant la partie formant galet de poussée précitée s'engageant dans la partie formant came précitée et des moyens d'arrêt en rotation de l'organe formant écrou.

Avantageusement, une seconde partie formant galet est montée à l'extrémité libre du doigt au-dessus de la partie formant galet de poussée, et est engagée dans une rainure fixe de guidage et d'arrêt en rotation, parallèle à l'arbre d'entraînement.

Par ailleurs, le déplacement des deux parties formant galet ci-dessus autour du doigt et à l'intérieur respectivement de la rainure formant came et de la rainure de guidage nécessite un certain jeu de fonctionnement afin d'éviter le coincement de l'un ou l'autre des parties formant galet dans leurs rainures respectives. Ceci se traduit, du fait de la conception du dispositif de commande ci-dessus décrite, par la présence de jeux et battements suivant la direction de l'axe des barres de direction arrière perpendiculaire à l'axe longitudinal du véhicule.

La présente invention, dans l'une de ses formes de réalisation, a donc également pour but d'éliminer les effets négatifs du jeu de fonctionnement de chaque partie formant galet à l'intérieur de sa rainure respective en proposant un dispositif de commande de direction arrière notamment pour un véhicule automobile à quatre roues directrices du type où l'arbre d'entraînement, disposé longitudinalement au véhicule, est monté rotatif dans le boîtier du mécanisme de direction arrière et comporte une partie filetée sur laquelle est monté un organe formant écrou auquel est solidarisé un doigt portant une première partie formant galet engagée dans une rainure formant came réalisée à travers un premier plateau solidaire des barres de direction arrière axialement mobiles et une seconde partie formant galet engagée dans une rainure de guidage d'un second plateau fixé au boîtier du mécanisme de direction arrière et caractérisé en ce que le premier plateau est constitué de deux plaques inférieure et supérieure superposées comportant respectivement deux rainures inférieure et supérieure définissant la rainure formant came, la plaque inférieure étant fixée aux barres de direction arrière, la première partie formant galet comprend deux galets superposés susceptibles de se déplacer respectivement dans les deux rainures inférieure et supérieure, la plaque supérieure est maintenue en position décalée, par des moyens appropriés par rapport à la plaque inférieure de façon que le galet supérieur soit disposé en appui, sans pratiquement aucun jeu, entre le doigt et une paroi latérale de la rainure supérieure et que le galet inférieur soit disposé en appui, sans pratiquement aucun jeu, entre le doigt et une paroi latérale de la rainure inférieure opposée à la paroi latérale de la rainure supérieure, le diamètre externe de chaque galet étant inférieur à la largeur de chaque rainure.

Selon une autre forme de réalisation de l'invention, le second plateau précité est constitué de deux plaques inférieure et supérieure superposées comportant respectivement deux rainures inférieure et supérieure définissant la rainure de guidage, la seconde partie formant galet comprend deux galets superposés susceptibles de se déplacer respectivement dans les deux rainures inférieure et supérieure de guidage et les deux plaques inférieure et supérieure sont immobilisées l'une par rapport à l'autre en position décalée, par des moyens appropriés tels que des vis de fixation,de façon que le galet supérieur soit disposé en appui, sans pratiquement aucun jeu, entre le doigt et une paroi latérale de la rainure supérieure et que le galet inférieur soit disposé en appui, sans pratiquement aucun jeu, entre le doigt et une paroi latérale de la rainure inférieure opposée à la paroi latérale de la rainure supérieure, le diamètre externe de chaque galet étant inférieur à la largeur de chaque rainure de guidage.

Selon une autre caractéristique de l'invention, les moyens appropriés précités de maintien de la plaque supérieure relativement à la plaque inférieure du plateau comportant la rainure formant came sont constitués de préférence par des vis de fixation qui solidarisent également la plaque supérieure aux barres de direction arrière après application aux plaques inférieure et supérieure de contraintes opposées perpendiculaires à l'arbre d'entraînement et passant par l'axe du doigt précité de façon à obtenir le décalage précité de la plaque supérieure relativement à la plaque inférieure.

Selon encore une autre caractéristique de l'invention, les deux plaques inférieure et supérieure du second plateau précité sont solidarisées entre elles et au boîtier du mécanisme de direction arrière après application à celles-ci de contraintes opposées perpendiculaires à l'arbre d'entraînement et passant par l'axe du doigt de façon à obtenir le décalage précité de la plaque supérieure relativement à la plaque inférieure.

Selon toujours une caractéristique de l'invention, la plaque supérieure du premier plateau est montée librement coulissante de façon guidée dans le boîtier du mécanisme de direction arrière entre la plaque inférieure du second plateau et la plaque inférieure du premier plateau et les moyens précités de maintien de la plaque supérieure du premier plateau en position décalée relativement à la plaque inférieure comprennent deux ressorts identiques de compression précontraints disposés d'une part, de part et d'autre de l'axe des barres de direction arrière à une même distance de celui-ci et, d'autre part, de part et d'autre de l'arbre d'entraînement à une même distance de celui-ci et logés chacun, de façon équilibrée, dans deux évidements complémentaires formant chambrage réalisés respectivement dans les plaques supérieure et inférieure en étant en appui par ses spires extrêmes respectivement sur une paroi en bout correspondante de l'évidement de la plaque supérieure et une paroi en bout correspondante de l'évidement de la plaque inférieure opposée à la première paroi en bout de façon à exercer en permanence des efforts ou contraintes perpendiculaires à l'arbre d'entraînement et passant par l'axe du doigt pour maintenir décalées l'une par rapport à l'autre les plaques supérieure et inférieure.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels :
La figure 1 est une vue en perspective schématique d'un véhicule automobile muni du dispositif de direction selon l'invention ;
La figure 2 représente une courbe de braquage des roues arrière en fonction du braquage des roues avant ;
La figure 3 est une vue en coupe longitudinale du mécanisme de direction arrière de l'invention ;
La figure 4 est une vue en coupe suivant la ligne IV-IV de la figure 3 ;
La figure 5 est une vue suivant la flèche V de la figure 3 ;
La figure 6 est une vue en coupe identique à celle de la figure 3 et représentant un deuxième mode de réalisation du dispositif selon l'invention ;
La figure 7 est une vue suivant la flèche VII de la figure 6 ;
La figure 8 est une vue en coupe suivant la ligne VIII-VIII de la figure 9 ;
La figure 9 est une vue en coupe suivant la ligne IX-IX de la figure 8 ;
La figure 10 est une vue en coupe suivant la ligne X-X de la figure 9;
La figure 11 est une vue similaire à la figure 10 ; et
La figure 12 est une vue en coupe identique à la coupe de la figure 10 et représentant un autre mode de réalisation de l'invention.

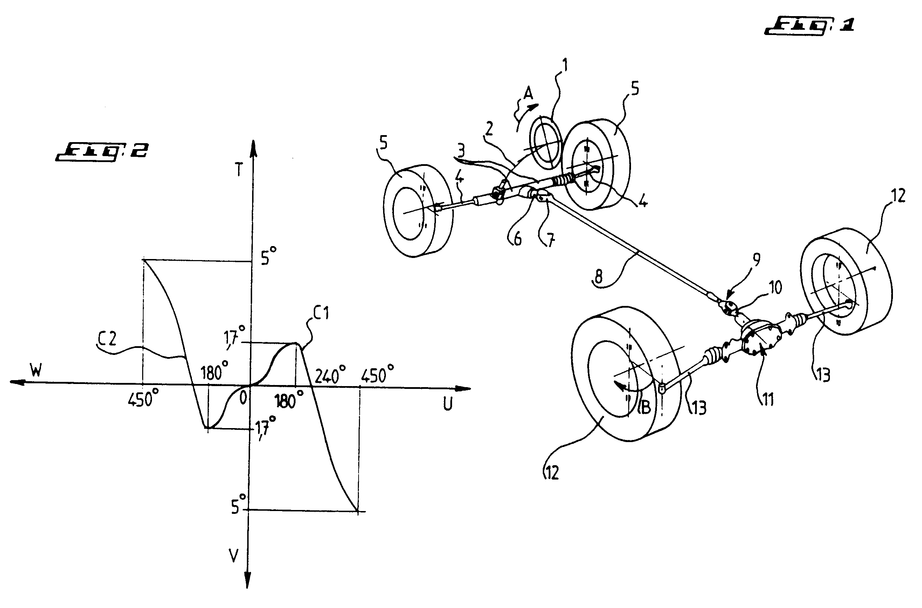

En se reportant à la figure 1, la référence 1 désigne un volant de direction dont l'arbre de direction 2 est relié à un train d'engrenages à crémaillère ayant un arbre à crémaillère 3 dont les extrémités latérales sont reliées respectivement à des barres d'accouplement 4 aux extrémités extérieures desquelles sont reliées les roues avant 5 qui peuvent être orientées angulairement suivant le sens de braquage du volant. Un arbre à pignon 6 s'étendant en arrière de l'arbre 3 a son extrémité arrière reliée par un joint articulé 7 à un arbre de transmission 8 dont l'extrémité arrière est reliée par un joint articulé 9 à un arbre d'entraînement 10 d'un mécanisme de direction arrière 11 disposé entre les deux roues arrière 12 du véhicule. L'arbre d'entraînement 10 tout comme l'arbre de transmission 8 sont montés sensiblement longitudinalement au véhicule. Le mécanisme de direction arrière 11 est mécaniquement relié à des barres de direction commandant par l'intermédiaire de biellettes des leviers de pivotement des roues arrière 12 montées sur pivots.

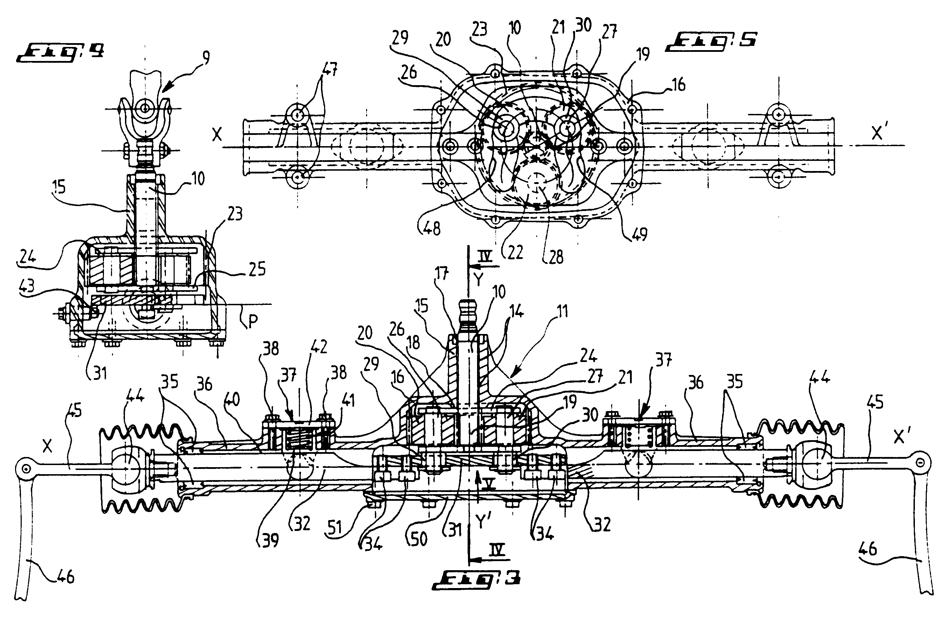

Le mécanisme de direction arrière 11 est adapté pour braquer les roues arrière 12 dans le même sens que les roues avant 5 pour une valeur d'angle de braquage du volant inférieure à une valeur de seuil et dans le sens opposé aux roues avant quand la valeur d'angle de braquage du volant dépasse le valeur de seuil. La commande du braquage des roues arrière 12 en fonction du braquage des roues avant 5 s'effectue suivant une loi telle que celle représentée à titre d'exemple par la courbe de la figure 2. Sur cette figure, sur les demi-axes OU et OW sont portées les valeurs d'angle de braquage du volant respectivement dans les cas où le véhicule se déplace en virage à droite et en virage à gauche. Sur les demi-axes OT et OV sont portées les valeurs d'angle de braquage des roues arrière respectivement vers la droite et vers la gauche en référence à la figure 1. La courbe C1 située dans le plan situé à droite de l'axe TOV par rapport à la figure 2 représente les deux sens de braquage des roues arrière 12 selon l'amplitude donnée au volant de direction 1 dans un même sens. Ainsi, lorsque le volant 1 est tourné suivant la flèche A en figure 1 d'un angle de braquage faible (inférieure à la valeur de seuil fixée dans le cas présent à environ 180°) les roues arrière sont braquées dans le même sens que les roues avant,comme indiqué par la flèche B en figure 1, d'une valeur d'angle maximale d'environ 1,7° correspondant à la valeur de seuil de façon à produire un effet sous-vireur souhaitable du véhicule. Lorsque le volant est tourné d'un angle de braquage important, dans le cas présent supérieur à la valeur de seuil de 180°, les roues arrière sont braquées dans le sens opposé à la flèche B, donc opposé aux roues avant en passant par la condition de parallélisme des roues par rapport à l'axe longitudinal du véhicule (correspondant à un angle de braquage du volant de 240°) jusqu'à une valeur maximale d'angle de braquage des roues arrière vers la gauche d'environ 5° pour une valeur d'angle de braquage du volant de 450° de façon à produire un effet survireur souhaitable au véhicule. Ce même raisonnement est utilisé en référence à la courbe C2 située dans le plan à gauche de l'axe TOV et ne sera pas expliqué en détail sinon que pour un angle de braquage dans le sens opposé à la flèche A du volant inférieur à la valeur de seuil de 180°, les roues arrière sont braquées vers la gauche par rapport à la figure 1 dans le même sens que les roues avant tandis que pour un angle de braquage important du volant dans le même sens, les roues arrière sont braquées vers la droite, donc dans le sens opposé aux roues avant passant par leur parallélisme par rapport à l'axe longitudinal du véhicule (correspondant à un angle de braquage du volant de 240°) de façon à engendrer respectivement deux effets sous-vireur et survireur souhaitable du véhicule.

Le dispositif selon l'invention est donc adapté pour commander le braquage des roues arrière en fonction du braquage des roues avant suivant la loi de braquage définie par la courbe C1 ou C2, étant bien entendu que tout autre loi, adaptée au comportement routier du véhicule, peut être élaborée.

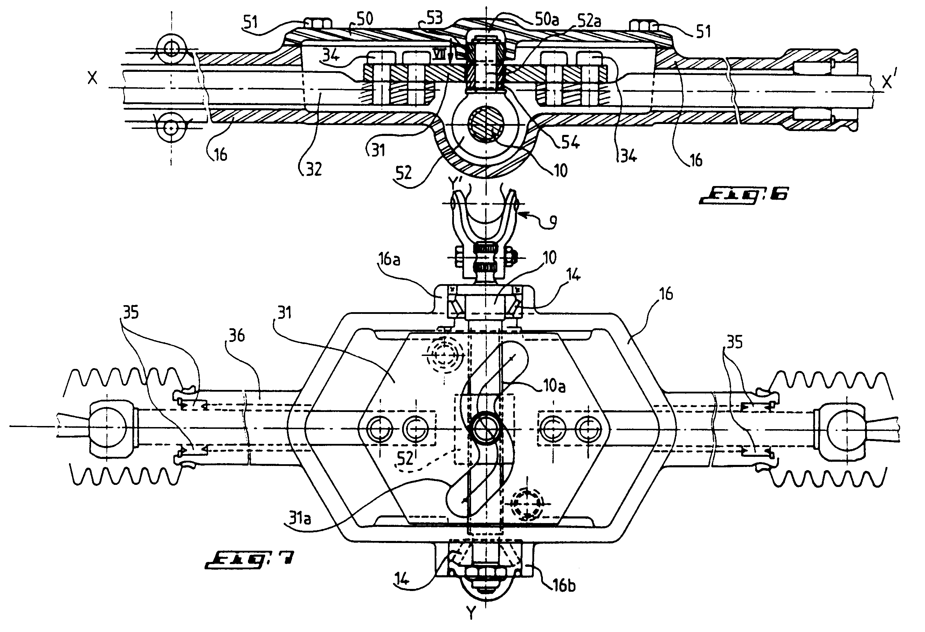

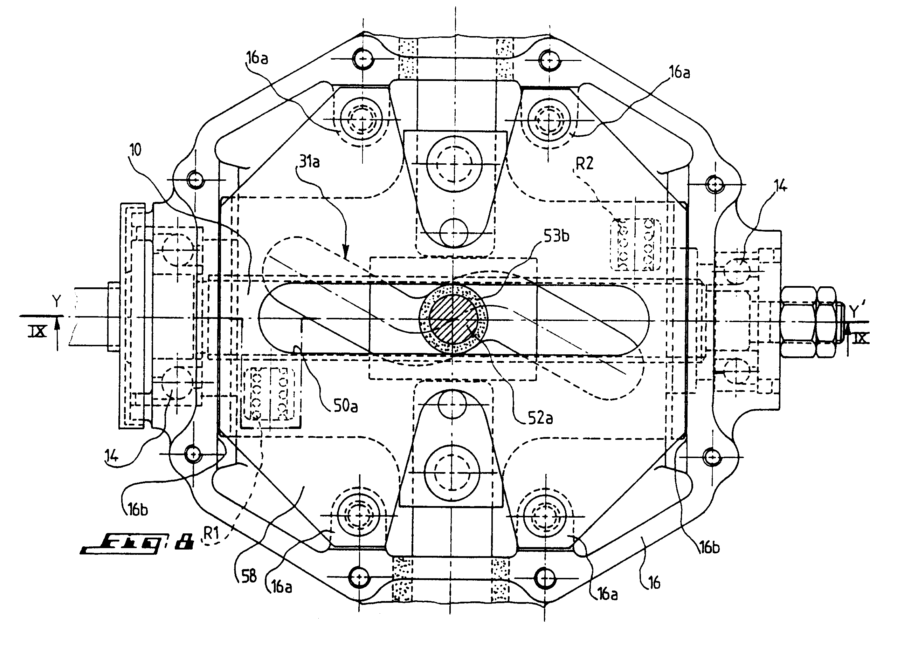

Selon le premier mode de réalisation du dispositif représenté aux figures 3-5, l'arbre d'entraînement 10 est monté rotatif sur une paire de paliers avant et arrière 14 dans un support de paliers tubulaire 15 faisant corps avec le boîtier 16 du mécanisme 11. L'arbre 10 est maintenu axialement dans le boîtier 16 par un ensemble rondelle-jonc d'arrêt 17 du côté extérieur au boîtier et un ensemble épaulement et rondelle 18 du côté interne au boîtier. L'arbre 10 comprend un pignon d'entrée 19 solidaire de celui-ci et fixé dans le boîtier 16 et en prise avec trois pignons satellites 20-22 disposés angulairement équidistants par rapport au pignon 19 de l'arbre 10. Les trois pignons satellites engrènent à l'intérieur d'une couronne dentée fixe 23 faisant corps avec le boîtier 16 et sont guidés en rotation et maintenus en position relative à l'aide de deux flasques espacés et parallèles 24 et 25, centrés en rotation sur l'arbre 10 et liés rigidement entre eux par les trois axes 26-28 respectivement des pignons satellites 20-22. Deux 26 et 27 des axes des pignons satellites sont prolongés en arrière pour porter respectivement sur leur prolongement deux galets 29 et 30. Un plateau 31 est rigidement lié aux deux barres de direction arrière 32 par exemple par l'intermédiaire de vis de fixation 34. Les barres 32 sont guidées dans leurs déplacements axiaux suivant l'axe X-X′ par deux paires de paliers 35 dans un support de paliers longitudinal 36 faisant corps avec le boîtier 16 du mécanisme de direction arrière. De plus, chaque barre 32 est arrêtée en rotation par un ensemble formant poussoir 37 fixé, par exemple par des vis de fixation 38, à la partie longitudinale 36 et comportant le poussoir proprement dit 39 dont l'extrémité est en appui sur un méplat 40 de la barre 32 par l'action d'un ressort de compression 41 disposé entre le poussoir 39 et la partie formant couvercle 42 solidaire de la partie 36 par les vis 38. A la place de l'ensemble formant poussoir 37, il est possible de prévoir des guides 43 longitudinalement espacés suivant l'axe X-X′ sous le plateau 31 comme représenté en figure 4 pour le maintenir dans le plan P passant par la face arrière du plateau pendant ses déplacements axiaux suivant l'axe X-X′. Chaque barre 32 est reliée de façon articulée par une rotule 44 d'une biellette 45 reliée de façon articulée à son extrémité opposée à la rotule 44 à un levier de commande 46 du pivotement autour de l'axe d'articulation du pivot porte-fusée de la roue arrière associée. Le mécanisme 11 est rigidement fixé à la traverse arrière ou à la partie de caisse arrière (non représentée) du véhicule par l'intermédiare par exemple de bras de fixation 47 solidaire de la partie longitudinale 36 du boîtier 16.

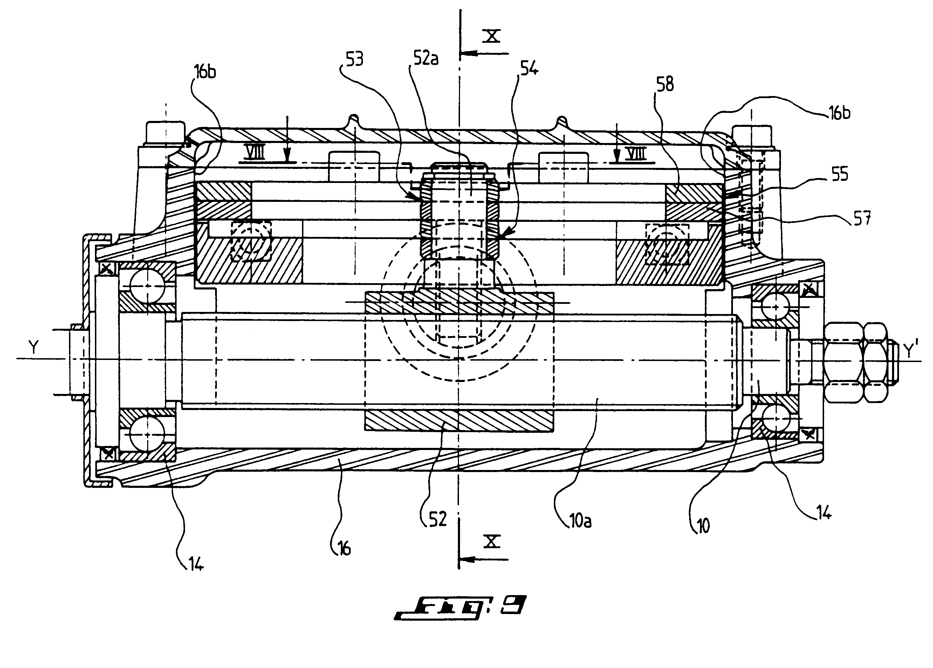

Le plateau 31 comprend deux parties formant came 48 et 49 réalisées symétriquement de part et d'autre du plan vertical à la figure 3 et passant par l'axe Y-Y′ de l'arbre 10. Chaque partie formant came est formée par une rainure traversant le plateau 31 et ayant un profil définissant la loi de braquage des roues arrière selon le braquage des roues avant, cette loi étant par exemple celle définie par les courbes C1 et C2 de la figure 2. Le galet 29 ou le galet 30 peut se déplacer sans jeu dans la rainure 48 ou 49, respectivement, pour agir séparément suivant le sens de rotation décrit par les deux axes 26 et 27 respectivement des deux pignons satellites 20 et 21. Les deux galets 29 et 30 appliquent chacun isolément et sans discontinuité leur action sur l'une ou l'autre des parties formant came 48,49. A partir de la position haute représentée en figure 5 où les deux galets assurent le contact avec respectivement les deux parties formant came (position zéro ou de parallélisme des roues avec l'axe longitudinal du véhicule ), lorsque l'on braque les roues avant vers la gauche ou vers la droite, un seul galet pilote ou commande une partie formant came correspondante et provoque le déplacement du plateau 31 et donc des barres de direction 32 suivant l'axe X-X′, et la loi définie. Le retour à la position zéro s'effectue par le passage des mêmes déplacements et pour le braquage des roues avant dans le sens opposé au précédent, le premier galet se dégage de son action tandis que l'autre galet agit sur l'autre partie formant came correspondante. Dans la condition de parallélisme à zéro, les deux axes porte-galets 26 et 27, perpendiculaires du plan P au plateau 31, doivent être réglés à égale distance de l'axe X-X′ de la barre 32 de commande des biellettes des leviers de pivotement des roues arrière. Il est à noter que l'ensemble porte-satellites tourne avec réduction par rapport à la vitesse de rotation du pignon 19 de l'arbre 10 de façon à obtenir un faible déplacement angulaire de rotation autour du pignon 19 des deux axes 26,27 portant respectivement les galets de poussée 29 et 30 des parties formant came 48 et 49 du plateau 31.

Le boîtier 16 du mécanisme de direction arrière 11 comporte à sa partie arrière un capot ou couvercle 50 fixé par exemple par des vis de fixation 51 au boîtier 16 et permettant d'avoir accés directement au plateau 31 qui peut ainsi être démonté par desserrage des vis 34 et remplacé par un autre plateau 31 comportant deux parties formant came d'un profil différent de celui des parties formant came 48 et 49 de façon à définir une autre loi de braquage des roues arrière en fonction du braquage des roues avant et tenant compte du véhicule.

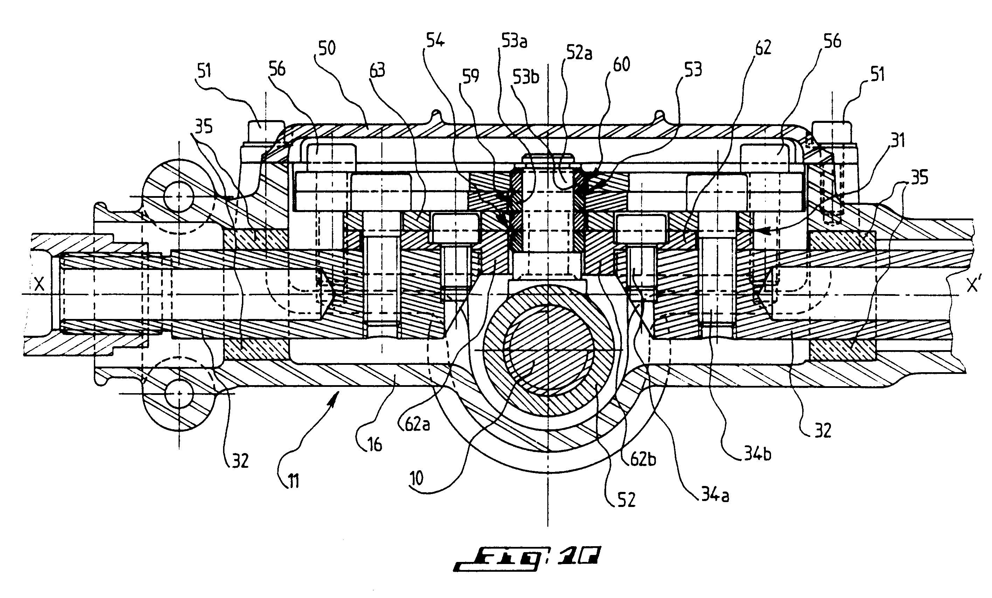

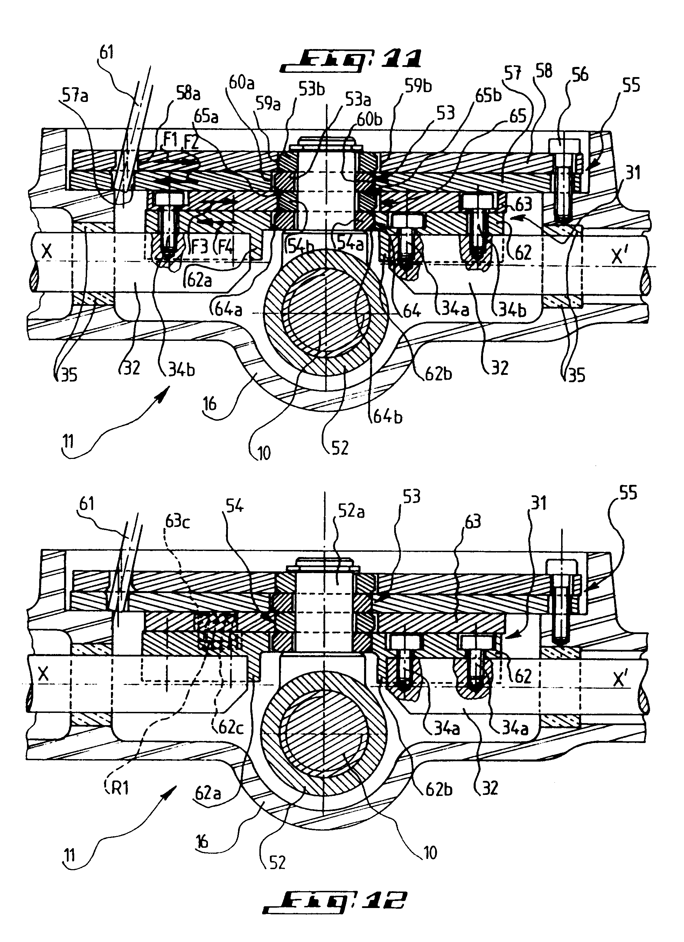

On va décrire maintenant le deuxième mode de réalisation du mécanisme de direction arrière représenté aux figures 6 et 7.

Le principe de base de ce mode de réalisation est similaire à celui du premier mode de réalisation puisque l'on déplace axialement suivant une loi prédéfinie, par exemple celle représentée en figure 2, les barres de direction arrière 32 commandant le pivotement des roues arrière suivant l'axe X-X′ dans un sens ou dans l'autre à partir d'une position moyenne de réglage de parallélisme à zéro des roues du véhicule.

Selon ce mode de réalisation, l'arbre d'entraînement 10, relié à l'extrémité arrière de l'arbre de transmission par l'intermédiaire d'un joint articulé 9, est maintenu axialement dans le boîtier 16 par des paliers avant et arrière 14 dans des supports de paliers 16a et 16b faisant corps avec le boîtier 16. L'arbre 10 comporte sensiblement sur toute sa longueur une partie filetée 10a entraînée en rotation à partir de l'avant par la barre de transmission et le joint articulé 9. Un organe formant écrou 52 peut se déplacer linéairement de part et d'autre d'une position centrale ou médiane de la partie filetée de l'arbre 10 correspondant à un réglage à parallélisme à zéro des roues arrière. Cette position est représentée clairement en figure 7. L'organe formant écrou 52 comporte, solidaire de celui-ci, et perpendiculairement à son axe longitudinal, un axe ou doigt porte-galets 52a. Plus précisément, le doigt 52a porte un premier galet supérieur 53 engagé dans une rainure de guidage 50a du couvercle 50 parallèle à l'axe de l'arbre 10 et un deuxième galet inférieur de poussée 54 qui se trouve à l'intérieur d'une partie formant came 31a du plateau 31. Le premier galet 53 guide dans un plan perpendiculaire à l'axe X-X′ le déplacement de l'organe formant écrou 52 et joue le rôle d'arrêt en rotation. La partie formant came 31a est réalisée par une rainure traversant le plateau 31 et ayant un profile définissant la loi de braquage représentée en figure 2, étant bien entendu que tout autre profile peut être prédéfini suivant le comportement routier souhaitable du véhicule. Le plateau 31 est fixé rigidement, par l'intermédiaire des vis de fixation 34 aux barres de direction arrière 32 montées sur des paliers 35 dans des supports de paliers 36 solidaires du boîtier 16. Le couvercle 50 est fixé au boîtier 16 par l'intermédiaire des vis de fixation 51. Ce couvercle permet d'avoir accès aux vis de fixation 34 pour démonter le plateau 31 et le remplacer par un autre plateau ayant une partie formant came d'un profil différent de la partie formant came 31a de façon à définir une autre loi de braquage des roues arrière en fonction du braquage des roues avant.

On comprend des explications qui précèdent que le pivotement autour de son axe de l'arbre de transmission du véhicule entraîne en rotation l'arbre 10 dont la partie filetée déplace l'organe formant écrou dans une direction suivant l'axe Y-Y′ perpendiculaire à l'axe X-X′. L'organe formant écrou 52 est guidé dans son déplacement par le galet 53 tandis que le galet 54 agit dans la partie formant came pour déplacer le plateau 31 avec les barres de direction 32 suivant l'axe X-X′ dans un sens dépendant du sens de déplacement de l'organe formant écrou 52. Les barres de direction 32 commandent ainsi le pivotement des roues arrière en fonction du braquage des roues avant suivant la loi prédéfinie.

Le dispositif de commande des roues arrière suivant l'invention ci-dessus décrit est d'une structure simple, étanche, ayant une stabilité comparable à celle d'une direction mécanique avant et a pour avantage important de pouvoir changer de loi de braquage des roues arrière en fonction du braquage des roues avant par simple changement du plateau comportant les parties formant came.

En se reportant aux figures 8 à 11, il va être décrit maintenant un troisième mode de réalisation du dispositif de l'invention et perfectionnant le second mode de réalisation précédemment décrit.

Comme déjà expliqué, l'arbre d'entraînement 10 est monté tournant dans le boîtier 16 du mécanisme de direction arrière 11 par l'intermédiaire des roulements à billes avant et arrière 14 solidaires du boîtier 16. L'arbre 10 comporte sur pratiquement toute sa longueur la partie filetée 10a entraînée en rotation à partir de l'avant par la barre de transmission 8 et le joint articulé 9. L'organe formant écrou 52 peut se déplacer linéairement de part et d'autre d'une position centrale ou médiane de la partie filetée de l'arbre 10 correspondant à un réglage de parallélisme à zéro des roues arrière. L'organe formant écrou 52 porte, solidaire de celui-ci et perpendiculairement à son axe longitudinal, le doigt 52a portant des première et seconde parties superposées formant galets 53 et 54. La première partie formant galet inférieure de poussée 54 est disposée en engagement à l'intérieur de la rainure sensiblement en forme S formant came 31a réalisée à travers le plateau 31 relié rigidement aux deux barres de direction arrière 32 par l'intermédiaire des vis de fixation 34a et 34b, lesquelles barres 32 sont guidées dans leurs déplacements axiaux suivant l'axe X-X′ par les deux paires de paliers 35 solidaires du boîtier 16. La rainure formant came 31a définit la loi de braquage c-dessus mentionnée. La seconde partie formant galet supérieure 53 est engagée dans la rainure de guidage 50a disposée au-dessus de l'arbre d'entraînement 10 parallèlement à celui-ci et réalisée à travers un plateau 55 solidaire du boîtier 16 par l'intermédiaire de vis de fixation 56. La seconde partie formant galet 53, en se déplaçant dans la rainure de guidage 50a, guide suivant l'axe Y-Y′, perpendiculaire à l'axe X-X′, le déplacement de l'organe formant écrou 52 et joue le rôle d'arrêt en rotation de celui-ci.

Le plateau de guidage 55 est constitué de deux plaques superposées inférieure 57 et supérieure 58 comportant respectivement deux rainures longitudinales inférieure 59 et supérieure 60 de largeurs identiques et définissant la rainure de guidage 50. Les deux plaques 57 et 58 sont fixées sur des pattes ou oreilles de fixation 16a solidaires du boitier 16 comportant chacune un taraudage pour le vissage de chaque vis de fixation 56 à travers les deux plaques 57 et 58. Les surfaces usinées de support des pattes 16a se trouvent dans un même plan de façon que la plaque inférieure 57 vienne en appui sur ces surfaces usinées en étant parallèle au plateau 31 et légèrement décalée au-dessus de ce dernier. De plus, les deux plaques 57 et 58, avant d'être fixées sur les pattes 16a, peuvent être déplacées l'une par rapport à l'autre suivant la direction de l'axe X-X′ en étant guidées, par leurs deux parois latérales parallèles a l'axe X-X′, par deux parois opposées 16b usinées dans le boîtier 16 et également parallèles au plan vertical à la figure 1 passant par l'axe X-X′. Plus précisément, les deux plaques 57 et 58 comportent respectivement deux trous traversant 57a, 58a approximativement coaxiaux et dans lesquels peut être introduite la partie extrême d'un outil ou levier de manoeuvre 61 qui, lorsqu'incliné comme représente à la figure 11, est en appui en opposition dans les trous 57a et 58a de façon à déplacer la plaque 57 en sens opposé à la plaque 58. Bien entendu, l'introduction de levier 61 dans les trous 57a et 58a s'effectue après dépôt préalable du couvercle 50 fixé au boîtier 16 à l'aide des vis de fixation 51. La second partie formant galet 53 comprend deux galets superposés 53a et 53b susceptibles de se déplacer respectivement dans les deux rainures inférieure 59 et supérieure 60. Les deux galets 53a et 53b ont chacun le même diamètre externe qui est inférieur à la largeur de chaque rainure 59 et 60 tandis que leur diamètre interne est légèrement supérieur au diamètre du doigt 52a. Avant de solidariser les deux plaques 57, 58 au boîtier 16, celles-ci sont déplacées en sens opposé l'une par rapport à l'autre dans la direction de l'axe X-X′ à l'aide du levier 61 qui exerce ainsi sur les deux plaques 57 et 58 respectivement des forces ou efforts de sens opposé F1 et F2 perpendiculaires à l'arbre d'entraînement 10 et passant par l'axe du doigt 52a. Les forces F1 et F2 agissent de telle manière que le galet inférieur 53a soit disposé en appui, sans pratiquement aucun jeu, entre le doigt 52a et la paroi latérale 59a de la rainure 59 située à gauche de l'axe du doigt 52a et que le galet supérieur 53b soit disposé en appui, également sans pratiquement aucun jeu, entre le doigt 52a et la paroi latérale 60b située à droite de l'axe du doigt 52a et donc opposée à la paroi latérale 59a, de la rainure 60. Le déplacement relatif en sens opposé des deux plaques 57 et 58 à l'aide du levier 61 revient donc à rattraper le jeu pouvant exister entre la seconde partie formant galet 53 et la rainure de guidage 50a tout en permettant cependant aux galets 53a, 53b de tourner autour de l'axe du doigt 52a et à l'intérieur de leurs rainures respectives 59, 60. Bien entendu, le levier 61 peut être manoeuvré en sens inverse à celui représenté à la figure 4 afin d'exercer des efforts F1 et F2 respectivement opposés aux efforts susmentionnés F1 et F2 de telle manière que le galet 53a soit disposé en appui, sans pratiquement aucun jeu, entre le doigt 52a et la paroi latérale 60a de la rainure 60 opposée à la paroi latérale 60b et que le galet 53b soit disposé en appui entre le doigt 52a et la paroi latérale 59b de la rainure 59 opposée à la paroi latérale 59a, ce qui permet également d'éliminer pratiquement tout jeu relatif entre la seconde partie formant galet 53 et la rainure de guidage 50a du plateau 55. Les forces F1 et F2 sont maintenues pendant la durée de serrage des vis de fixation 56 immobilisant entre elles les deux plaques 57, 58 et les solidarisant au boîtier 16.

Le plateau 31 est également constitué de deux plaques superposées inférieure 62 et supérieure 63 comportant respectivement deux rainures identiques inférieure 64 et supérieure 65 ayant par exemple chacune une forme sensiblement en S pour définir la rainure formant came 31a. La plaque inférieure 62 comprend, solidaires sous celle-ci, deux épaulements 62a et 62b contre lesquels viennent en appui respectivement les deux extrémités libres des deux barres de direction arrière 32 qui sont axialement mobiles suivant l'axe X-X′. La plaque inférieure 62 est fixée sur les barres 32 par l'intermédiaire des vis de fixation 34a. La plaque supérieure 63 est fixée sur la plaque inférieure 62 par les vis de fixation 34b traversant la plaque 62 et se vissant dans les barres de direction arrière 32. Comme pour les deux plaques 57 et 58, les plaques 62 et 63 peuvent être déplacées ou décalées l'une par rapport à l'autre en appliquant à celles-ci à l'aide d'un levier identique au levier 61 mais non représenté, des efforts ou contraintes opposées F3 et F4 perpendiculaires à l'axe longitudinal de l'arbre d'entraînement 10 et passant par l'axe du doigt 52a. La première partie formant galet 54 est constituée de deux galets superposés inférieur 54a et supérieur 54b ayant des diamètres externes identiques inférieurs à la largeur des deux rainures formant cames 64 et 65 et leurs diamètres internes supérieurs au diamètre du doigt 52a. Afin d'éliminer tout jeu relatif entre la partie formant galet 54 et la rainure formant came 31a, la plaque inférieure 62 est tout d'abord fixée aux barres 32 par des vis de fixation 34a pour maintenir les barres 32 et la plaque 62 dans un même plan et, avant de fixer la plaque supérieure 63 à la plaque 62 à l'aide des vis de fixation 34b, on exerce sur les plaques 62 et 63 les efforts ou contraintes F3 et F4 de telle manière que le galet 54a soit disposé en appui, sans pratiquement aucun jeu, entre le doigt 52a et la paroi latérales 64b, située à droite de l'axe du doigt 52a comme représenté à la figure 11, de la rainure 64 et que le galet 54b soit disposé en appui, sans pratiquement aucun jeu, entre le doigt 52a et la paroi latérale 65a de la rainure 65 opposée à la paroi latérale 64b de la rainure 64. Le rattrapage de jeu entre la première partie formant galet 54 et la rainure formant came 31a peut également être effectué en exerçant des efforts ou contraintes F3 ou F4 respectivement opposées aux contraintes F3 et F4 représentées en figure 11 de façon que le galet 54a soit en appui entre la paroi latérale 64a de la rainure 64 opposée à la paroi latérale 64b et que le galet 54b soit en appui, sans pratiquement aucun jeu, entre la paroi latérale 65b de la rainure 65 opposée à la paroi latérale 65a et le doigt 52a. En maintenant les efforts F3 et F4, les deux plaques 62, 63 sont immobilisées l'une par rapport à l'autre en serrant les vis de fixation 34b. Comme pour les plaques 57 et 58, les plaques 62 et 63, lors de l'opération de rattrapage de jeu, sont guidées suivant l'axe X-X′, au niveau de leurs parois latérales opposées parallèles à l'axe X-X′, par les parois de guidage 16b du boîtier 16.

Compte tenu des difficultés d'usinage pour obtenir dans les plaques 62 et 63 des rainures formant came 64, 65 à écarts de cote entre elles nuls, le mode de réalisation représenté à la figure 12 permet de surmonter ces difficultés.

Ce mode de réalisation ne diffère de celui représenté aux figures 8 à 11 que par la structure du plateau 31, les autres éléments représentés en figure 12 étant identiques à ceux du troisième mode de réalisation.

Le plateau représenté en figure 12 est constitué également des deux plaques inférieure 62 et supérieure 63, la plaque inférieure 62 comportant également les épaulements 62a et 62b contre lesquels viennent en appui respectivement les deux extrémités libres des deux barres de direction arrière 32 auxquelles la plaque 62 est fixée à l'aide des vis de fixation 34a. La plaque supérieure 63 est montée librement coulissante et guidée suivant l'axe X-X′ par les parois de guidage 16b du boîtier 16 entre la plaque inférieure 57 du plateau de guidage 55 et la plaque inférieure 62. Des moyens constitués par deux ressorts de compression R1 et R2 sont disposés entre les deux plaques 62 et 63 de façon à exercer en permanence des efforts ou contraintes opposées F3 et F4 perpendiculaires à l'arbre d'entraînement 10 et passant par l'axe du doigt 52a pour maintenir décalées l'une par rapport à l'autre les deux plaques 62 et 63, rattrapant ainsi tout jeu existant entre la partie formant galet 54 et la rainure formant came 31a comme expliqué dans le troisième mode de réalisation. Plus précisément, les deux ressorts R1 et R2 sont interposés entre les deux plaques 62 et 63, d'une part, de part et d'autre de l'axe X-X′ à une même distance de celui-ci et, d'autre part, de part et d'autre de l'axe Y-Y′ à une même distance de celui-ci et sont montés chacun précontraint et de façon équilibrée dans deux évidements complémentaires formant chambrage 62c et 63c réalisés respectivement dans les deux plaques 62 et 63. Chaque ressort R1 et R2 est en appui par l'une de ses spires extrêmes contre une paroi en bout du chambrage 63c perpendiculaire au plan de la figure 12 et par son autre spire extrême opposée contre une paroi en bout du chambrage 62c parallèle et opposée à la paroi en bout précédemment mentionnée du chambrage 63c. Les ressorts R1 et R2 permettent donc d'exercer des efforts F3 et F4 entre les plaques 62 et 63 de façon à réaliser un appui en position des deux galets de poussée 54a et 54b respectivement sur les deux plaques 62 et 63. Ce mode de réalisation a pour avantage de faciliter l'usinage des rainures formant came en ayant des tolérances moins strictes de fabrication et de faciliter le montage ou assemblage des différents éléments de l'invention.

Diverses modifications peuvent être apportées aux deux derniers modes de réalisation ci-dessus décrits de l'invention. Ainsi, pour obtenir un meilleur rendement mécanique, les galets 53a, 53b, 54a et 54b peuvent être remplacés par des roulements à billes ou à aiguilles. De plus, tout autre organe élastique que des ressorts de compression précontraints peut être utilisé pour exercer des efforts F3 et F4 entre les plaques 62 et 63.

En utilisant le dispositif de commande de direction arrière conforme à l'invention, on est certain, dans le cas d'un véhicule automobile à quatre roues directrices, d'avoir une direction précise et fidèle sans altérer sa stabilité. De plus, ce dispositif, tout en restant simple, permet d'atteindre le même niveau de qualité que les directions conventionnelles sur l'avant.

## Revendications

1. Dispositif de commande de direction arrière notamment pour un véhicule automobile à quatre roues directrices, dont les roues arrière (12) sont montées sur pivots et reliées à des barres de direction (32) commandant les leviers de pivotement (46) des roues arrière et du type comprenant un arbre de transmission (8) monté longitudinalement au véhicule et un mécanisme de direction arrière (11) mécaniquement relié à l'extrémité arrière de l'arbre de transmission (8) et aux barres de direction arrière (32) pour commander le braquage des roues arrière en fonction du braquage des roues avant selon une loi prédéterminée et comprenant un plateau (31) à mouvement guidé comprenant au moins une partie formant came (31a;48;39) constituée par une rainure traversant le plateau (31) à profil définissant la loi de braquage prédéterminée et une partie formant galet (29;30;54) engagée dans la partie formant came (31a;48;39), caractérisé en ce que le plateau (31) est solidaire des barres de direction arrière (32) et est guidé transversalement à l'axe longitudinal du véhicule dans le boitier (16) du mécanisme de direction arrière (11) et la partie formant galet (29;30;54) est entraînée par un arbre d'entraînement (10), monté rotatif dans le boitier (16) et accouplé à l'arbre de transmission (8) tournant autour de son axe, et est accouplée à l'arbre d'entraînement (10) par des moyens mécaniques du mécanisme de direction arrière (11) transformant la rotation de l'arbre de transmission (8) en un déplacement approprié de la partie formant galet (29;30;54) de manière que cette dernière agisse par poussée sur la partie formant came (31a;48;39) pour déplacer ensemble le plateau (31) et les barres de direction arrière (32) transversalement à l'axe longitudinal du véhicule.

2. Dispositif selon la revendication 1, caractérisé en ce que le plateau (31) est fixé de façon amovible aux barres de direction arrière (32) par des vis de fixation accessibles par démontage d'un couvercle (50) amoviblement fixé au boitier (16) du mécanisme de direction arrière (11).

3. Dispositif selon la revendication 1 ou 2, caractérisé en ce que les moyens mécaniques de transformation précités comprennent trois pignons satellites (20-22) angulairement équidistants reliés par un porte-satellites constitué de deux flasques (24,25) centrés en rotation sur l'arbre d'entraînement (10) précité disposé longitudinalement au véhicule et liés rigidement entre eux par trois axes (26-28) respectivement des trois pignons satellites (20-22) lesquels sont en prise à l'intérieur d'une couronne dentée fixe (23); et en ce qu'au moins l'un (26,27) des axes des pignons satellites (20-22) est prolongé pour porter la partie formant galet de poussée (29;30) précitée.

4. Dispositif selon l'une des revendications précédentes, caractérisé en ce que le plateau précité comprend deux parties symétriques formant came (48,49) et en ce que deux (26,27) des axes des pignons satellites (20,21) sont prolongés pour porter respectivement deux galets de poussée (29,30), l'un ou l'autre des galets de poussée étant en prise dans la partie formant came correspondante selon le sens de braquage ses roues avant.

5. Dispositif selon l'une des revendications précédentes, caractérisé en ce qu'il comprend des moyens (37,43) d'arrêt en rotation autour de leur axe de chacune des barres de direction arrière (32).

6. Dispositif selon la revendication 1 ou 2 caractérisé en ce que les moyens mécaniques de transformation précités comprennent un organe formant écrou (52) monté sur une partie filetée (10a) de l'arbre d'entraînement (10) disposé longitudinalement au véhicule et auquel est solidarisé un doigt (52a) portant la partie formant galet de poussée (54) précitée s'engageant dans la partie formant came précitée et des moyens d'arrêt en rotation de l'organe formant écrou (52).

7. Dispositif selon la revendication 6, caractérisé en ce qu'une seconde partie formant galet (53) est montée à l'extrémité libre du doigt (52a) au-dessus de la partie formant galet de poussée (54), la seconde partie formant galet étant engagée dans une rainure fixe de guidage (50a) et d'arrêt en rotation, parallèle à l'arbre d'entraînement (10).

8. Dispositif selon les revendications 1,6 et 7, caractérisé en ce que le premier plateau (31) est constitué de deux plaques inférieure (62) et supérieure (63) superposées comportant respectivement deux rainures inférieure (64) et supérieure (65) définissant la rainure formant came (31a), la plaque inférieure (62) étant fixée aux barres de direction arrière (32), et en ce que la première partie formant galet (54) comprend deux galets superposés (54a,54b) susceptibles de se déplacer respectivement dans les deux rainures inférieure (64) et supérieure (65), en ce que la plaque supérieure (63) est maintenue en position décalée, par des moyens appropriés (34b;R1,R2) par rapport à la plaque inférieure (62) de façon que le galet supérieur (54b) soit disposé en appui, sans pratiquement aucun jeu, entre le doigt (52a) et une paroi latérale de la rainure supérieure (65) et que le galet inférieur (54a) soit disposé en appui, sans pratiquement aucun jeu, entre le doigt (52a) et une paroi latérale de la rainure inférieure (64) opposée à la paroi latérale de la rainure supérieure (65), le diamètre externe de chaque galet (54a,54b) étant inférieur à la largeur de chaque rainure (64,65).

9. Dispositif selon la revendication 8, caractérisé en ce que le second plateau (55) précité est constitué de deux plaques inférieure (57) et supérieure (58) superposées comportant respectivement deux rainures inférieure (59) et supérieure (60) définissant la rainure de guidage (50a), en ce que la seconde partie formant galet (53) comprend deux galets superposés (53a,53b) susceptibles de se déplacer respectivement dans les deux rainures inférieure (59) et supérieure (60) et en ce que les deux plaques inférieure (57) et supérieure (58) sont immobilisées l'une par rapport à l'autre en position décalée, par des moyens appropriés tels que des vis de fixation (34b), de façon que le galet supérieur (53b) soit disposé en appui, sans pratiquement aucun jeu, entre le doigt (52a) et une paroi latérale de la rainure supérieure (60) et que le galet inférieur (53a) soit disposé en appui, sans pratiquement aucun jeu, entre le doigt (52a) et une paroi latérale de la rainure supérieure (60), le diamètre externe de chaque galet (53a,53b) étant inférieur à la largeur de chaque rainure (59,60).

10. Dispositif selon la revendication 8, caractérisé en ce que les moyens appropriés précités de maintien de la plaque supérieure (63) relativement à la plaque inférieure (62) sont constitués de préférence par les vis de fixation (34b) qui solidarisent également la plaque supérieure (63) aux barres de direction arrière (32) après application aux plaques inférieure (62) et supérieure (63) de contraintes opposées perpendiculaires à l'arbre d'entraînement (10) et passant par l'axe du doigt (52a) précité de façon à obtenir le décalage précité de la plaque supérieure (63) relativement à la plaque inférieure (62).

11. Dispositif selon la revendication 9, caractérisé en ce que les deux plaques inférieure (57) et supérieure (58) du second plateau (55) précité sont solidarisées entre-elles et au boîtier (16) du mécanisme de direction arrière (11) après application à celles-ci de contraintes opposées et perpendiculaires à l'arbre d'entraînement (10) et passant par l'axe du doigt (52a) de façon à obtenir le décalage précité de la plaque supérieure (58) relativement à la plaque inférieure (57).

12. Dispositif selon la revendication 8, caractérisé en ce que la plaque (63) du premier plateau (31) précité est montée librement coulissante de façon guidée dans le boîtier (16) du mécanisme de direction arrière (11) entre la plaque inférieure (57) du second plateau (55) et la plaque inférieure (62) du premier plateau (31) et en ce que les moyens précités de maintien de la plaque supérieure (63) du premier plateau (31) en position décalée relativement à la plaque inférieure (62) comprennent deux ressorts identiques de compression (R1,R2) précontraints disposés d'une part, de part et d'autre de l'axe (X-X') des barres de direction arrière (32) à une même distance de celui-ci et d'autre part, de part et d'autre de l'arbre d'entraînement à une même distance de celui-ci et logés chacun, de façon équilibrée, dans deux évidements complémentaires (62c,63c) formant chambrage réalisés respectivement dans les plaques supérieure (62) et inférieure (63) en étant en appui par ses deux spires extrêmes respectivement sur une paroi en bout correspondante de l'évidement (63c) de la plaque supérieure (63) et une paroi en bout correspondante de l'évidement (62c) opposée à la paroi en bout de l'évidement (63c) de façon à exercer en permanence des efforts perpendiculaires à l'arbre d'entraînement (10) passant par l'axe du doigt (52a) pour maintenir décalées l'une par rapport à l'autre les plaques supérieure (63) et inférieure (62).

13. Dispositif selon l'une des revendications 8 à 12, caractérisé en ce que la plaque inférieure (62) comprend deux épaulements (62a,62b) solidaires sous celle-ci et contre lesquels sont en appui respectivement les deux extrémités libres des deux barres de direction arrière (32) et est fixée sur ces dernières de préférence par des vis de fixation (34a).

14. Dispositif selon la revendication 9 ou 11, caractérisé en ce que les deux plaques (57,58) du second plateau (55) précité sont solidarisées au boîtier (16) du mécanisme de direction arrière (11) par les vis de fixation (56) précitées.

15. Véhicule automobile équipé d'un dispositif selon l'une des revendications 1 à 14.

## Claims

1. Rear steering control device in particular for an automotive vehicle with four steerable wheels, the back wheels (12) of which are mounted on swivel king pins and connected to steering drag rods (32) operating levers (46) for pivoting the rear wheels and of the type comprising a transmission shaft (8) mounted longitudinally of the vehicle and a rear steering mechanism (11) mechanically connected to the rear end of the transmission shaft (8) and to the rear steering drag rods (32) for controlling the lock of the rear wheels as a function of the lock of the front wheels according to a predetermined law and comprising a plate (31) with a guided motion comprising at least one cam-like portion (31a ;48 ;39) constituted by a groove extending through the plate (31) with a profile defining a predetermined lock law and a roller-like portion (29 ;30 ;54) engaging the cam-like portion (31a ;48 ;39), characterized in that the plate (31) is made fast with the rear steering drag rods (32) and is guided transversely of the longitudinal axis of the vehicle in the casing (16) of the rear steering mechanism (11) and the roller-like portion (29 ;30 ;54) is driven by a drive shaft (10) rotatably mounted within the casing (16) and coupled to the transmission shaft (8) rotating about its axis and is coupled to the drive shaft (10) by mechanical means of the rear steering mechanism (11) converting the rotation of the transmission shaft (8) into a suitable displacement of the roller-like portion (29 ;30 ;54) so that the latter acts through a thrust upon the cam-like portion (31a ;48 ;39) for displacing together the plate (31) and the rear steering drag rods (32) transversely of the longitudinal axis of the vehicle.

2. Device according to claim 1, characterized in that the plate (31) is fastened in a removable manner to the rear steering drag rods (32) by fastening screws accessible through removal of a cover (50) detachably fastened to the casing (16) of the rear steering mechanism (11).

3. Device according to claim 1 or 2, characterized in that the aforesaid mechanical conversion means comprise three angularly equidistant pinions gears (20-22) connected by a pinion gear carrier consisting of two flanges (24, 25) centered for rotation on the aforesaid drive shaft (10) disposed longitudinally of the vehicule and rigidly connected therebetween by three shafts (26-28) of the three pinion gears (20-22), respectively, which are in engagement inside of a stationary toothed ring (23) ; and in that at least one (26, 27) of the shafts of the pinion gears (20-22) is extended to carry the aforesaid thrust roller-like portion (29 ; 30).

4. Device according to one of the foregoing claims, characterized in that the aforesaid plate comprises two symmetrical cam-like portions (48, 49) and in that two (26, 27) of the shafts of the pinion gears (20, 21) are extended to carry two thrust rollers (29, 30), respectively, either one of the thrust rollers being in engagement within the corresponding cam-like portion according to the direction of lock of the front wheels.

5. Device according to one of the foregoing claims, characterized in that it comprises means (37, 43) for stopping the rotation of each one of the rear steering drag rods (32) about their axes.

6. Device according to claim 1 or 2, characterized in that the aforesaid mechanical conversion means comprise a nut-like member (52) mounted onto a threaded portion (10a) of the drive shaft (10) disposed longitudinally of the vehicle and to which is made fast a finger (52a) carrying the aforesaid thrust roller-like portion (54) engaging the aforesaid cam-like portion and means for stopping the rotation of the nut-like member (52).

7. Device according to claim 6, characterized in that a second roller-like portion (53) is mounted at the free end of the finger (52a) above the thrust roller-like portion (54), the second roller-like portion engaging a stationary guide and rotation-stop groove (50a) parallel to the drive shaft (10).

8. Device according to claims 1, 6 and 7, characterized in that the first plate (31) consists of two superimposed lower and upper plates (62, 63) comprising two lower and upper grooves (64, 65), respectively, defining the cam-like groove (31a), the lower plate (62) being fastened to the rear steering drag rods (32) and in that the first roller-like portion (54) comprises two superimposed rollers (54a, 54b) capable of displacing themselves within both lower and upper grooves (64, 65), respectively, in that the upper plate (63) is held in offset position by suitable means (34b ;R1 ;R2) with respect to the lower plate (62) so that the upper roller (54b) be disposed in bearing relationship without practically any play between the finger (52a) and a side wall of the upper groove (65) and the lower roller (54a) be disposed in bearing relationship without practically no play between the finger (52a) and a side wall of the lower groove (64) opposite to the side wall of the upper groove (65), the external diameter of each roller (54a, 54b) being smaller than the width of each groove (64, 65).

9. Device according to claim 8, characterized in that the aforesaid second plate (55) consists of two superimposed upper grooves (59, 60), respectively, defining the guide groove (50a) and in that the second roller-like portion (53) comprises two superimposed rollers (53a, 53b) capable of displacing themselves within both lower and upper grooves (59, 60), respectively, and in that both lower and upper plates (57, 58) are made immovable with respect to each other in the offset position by suitable means such as fastening screws (34b) so that the upper roller (53b) be disposed in bearing relationship without practically any play between the finger (52a) and a side wall of the upper groove (60) and that the lower roller (53a) be disposed in bearing relationship without practically any play between the finger (52a) and a side wall of the upper groove (60), the external diameter of each roller (53a, 53b) being lower than the width of each groove (59, 60).

10. Device according to claim 8, characterized in that the aforesaid suitable means for holding the upper plate (63) in relation to the lower plate (62) are constituted preferably by the fastening screws (34b) which also make the upper plate (63) fast to the rear steering drag rods (32) after application to the lower and upper plates (62, 63) of opposite stresses perpendicular to the drive shaft (10) and passing through the axis of the aforesaid finger (52a) so as to obtain the aforesaid offset of the upper plate (63) in relation to the lower plate (62).

11. Device according to claim 9, characterized in that both lower and upper plates (57, 58) of the aforesaid second plate (55) are made fast to each other and to the casing (16) of the rear steering mechanism (11) after application thereto of opposite stresses perpendicular to the drive shaft (10) and passing through the axis of the finger (52a) so as to obtain the aforesaid offset of the upper plate (58) in relation to the lower plate (57).

12. Device according to claim 8, characterized in that the plate (63) of the first aforesaid plate (31) is mounted for freely sliding in a guided fashion in the casing (16) of the rear steering mechanism (11) between the lower plate (57) of the second plate (55) and the lower plate (62) of the first plate (31) and in that the aforesaid means for holding the upper plate (63) of the first plate (31) in an offset position in relation to the lower plate (62) comprise two identical prestressed compression springs (R1, R2) disposed on the one hand on either side of the axis (X-X') of the rear steering drag rods (32) at a same distance thereof and on the other hand on either side of the drive shaft at a same distance from the latter and each one accommodated in a balanced manner within two complementary recessing-like recesses (62c, 63c) formed in the upper and lower plates (62, 63), respectively, while bearing with its two end whorls upon a corresponding end wall of the recess (63c) of the upper plate (63) and a corresponding end wall of the recess (62c) opposite to the end wall of the recess (63c), respectively, so as to permanently exert forces perpendicular to the drive shaft (10) passing through the axis of the finger (62a) to keep the upper and lower plates (63, 62) offset with respect to each other.

13. Device according to one of claims 8 to 12, characterized in that the lower plate (62) comprises two shoulders (62a, 62b) made fast underneath the latter and upon which are bearing both free ends, respectively, of both rear steering drag rods (32) and is fastened to the latter preferably by fastening screws (34a).

14. Device according to claim 9 or 11, characterized in that both plates (57, 58) of the second aforesaid plate (55) are made fast to the casing (16) of the rear steering mechanism (11) by the aforesaid fastening screws (56).

15. Automotive vehicle fitted with a device according to one of claims 1 to 14.

## Patentansprüche

1. Vorrichtung zur Hinterlenkungssteuerung insbesondere für ein Kraftfahrzeug mit vier Leiträdern, dessen Hinterräder (12) an Achsschenkelbolzen angeordnet und die Hebel (46) zur Verschwenkung der Hinterräder betätigenden Lenkspindelschubstangen (32) verbunden sind und derjenigen Gattung, mit einer in Längsrichtung des Fahrzeugs angeordneten Uebertragungswelle (8) und einem mit dem hinteren Ende der Uebertragungswelle (8) und mit den hinteren Lenkspindelschubstangen (32) verbundenen Hinterlenkungsmechanismus (11) zur Steuerung des Ausschlags der Hinterräder in Abhängigkeit des Ausschlags der Vorderräder gemäss einem vorbestimmten Gesetz und der eine Platte (31) mitgeführter Bewegung umfasst, die wenigstens einen nockenförmigen Teil (31a;48;39) aufweist, der durch eine die Platte (31) durchsetzende Nut mit einem das vorbestimmte Ausschlagsgesetz festlegenden Profil und einen in den nockenartigen Teil (31a;48;39) eingreifenden rollenartigen Teil (29;30;54) gebildet wird, dadurch gekennzeichnet, dass die Platte (31) mit den hinteren Lenkspindelschubstangen (32) fest verbunden ist und quer zur Längsachse des Fahrzeugs in einem Gehäuse (16) des Hinterlenkungssteuerungsmechanismus (11) geführt wird und der rollenartige Teil (29;30;54) durch eine in dem Gehäuse (16) drehbar angeordnete und mit der sich um ihre Achse drehenden Uebertragungswelle (8) gekoppelte Antriebswelle (10) angetrieben wird und mit der Uebertragungswelle (10) durch mechanische Mittel des Hinterlenkungsmechanismus (11) gekoppelt ist, die das Umlaufen der Uebertragungswelle (8) in eine geeignete Verschiebung des rollenartigen Teiles (29;30;54) derart umwandelt, dass der letztere durch Schub auf den nockenartigen Teil (31a;48;39) einwirkt, um die Platte (31) und die hinteren Lenkspindelschubstangen (32) zusammen quer zur Längsachse des Fahrzeugs zu verschieben.

2. Vorrichtung nach Anspruch 1, dadurch gekennzeichnet, dass die Platte (31) in abnehmbarer Weise an den hinteren Lenkspindelschubstangen (32) durch Befestigungsschrauben befestigt ist, welche nach Abnehmen eines am Gehäuse (16) des Hinterlenkungsmechanismus (11) abnehmbar befestigten Deckels (50) zugänglich sind.

3. Vorrichtung nach Anspruch 1 oder 2, dadurch gekennzeichnet, dass die vorgenannten mechanischen Umwandlungsmittel drei winkelmässig abstandsgleiche Ausgleichkegelzahnräder (20-22) aufweisen, die durch einen drehbar zur vorgenannten in Längsrichtung des Fahrzeugs angeordneten Uebetragungswelle (10) zentrierten Flanschen (24,25) gebildeten Ausgleichkegelzahnradträger verbunden sind, welche miteinander durch drei Bolzen (26-28) jeweils der drei Ausgleichkegelzahnräder (20-22) starr verbunden sind, welche im Eingriff innerhalb eines ortsfesten Zahnkranzes (23) sind und dass wenigstens einer (26,27) der Bolzen der Ausgleichkegelzahnräder (20-22) verlängert ist, um den vorgenannten schubrollenartigen Teil (29;30) zu tragen.

4. Vorrichtung nach einem der vorangehenden Ansprüche, dadurch gekennzeichnet, dass die vorgenannte Platte zwei symmetrische nockenartige Teile (48,49) aufweist und dass zwei (26,27) der Bolzen der Ausgleichkegelzahnräder (20,21) verlängert sind, um jeweils zwei Schubrollen (29,30) zu tragen, wobei die eine oder die andere der Schubrollen im Eingriff in dem entsprechenden nockenartigen Teil gemäss der Ausschlagsrichtung der Vorderräder ist.

5. Vorrichtung nach einem der vorangehenden Ansprüche, dadurch gekennzeichnet, dass sie Mittel (37,43) um das Umlaufen jeder der hinteren Lenkspindelschubstangen (32) um deren Achse herum zu sperren, aufweist.

6. Vorrichtung nach Anspruch 1 oder 2, dadurch gekennzeichnet, dass die vorgenannten mechanischen Umwandlungsmittel ein an einem Gewindeteil (10a) der in Längsrichtung des Fahrzeugs angeordneten Uebertragungswelle (10) angeordnetes mutterartiges Glied (52), mit welchem ein den vorgenannten schubrollenartigen Teil (54) tragender Finger (52a) fest verbunden ist, der in den vorgenannten nockenartigen Teil eingreift und Mittel zur Sperrung des Drehens des mutterartigen Gliedes (52) aufweisen.

7. Vorrichtung nach Anspruch 6, dadurch gekennzeichnet, dass ein zweiter rollenartiger Teil (53) an dem freien Ende des Fingers (52a) oberhalb des schubrollenartigen Teiles (54) angeordnet ist, wobei der zweite rollenartige Teil in eine parallel zur Uebertragungswelle (10) verlaufende ortsfeste Nut (50a) zur Führung und zur Drehsperrung eingreift.

8. Vorrichtung nach den Ansprüchen 1,6 und 7, dadurch gekennzeichnet, dass die erste Platte (31) aus zwei unteren und oberen übereinander gelagerten Platten (62,63) besteht, die jeweils zwei die nockenartigen Nut (31a) festlegende untere und obere Nuten (64,65) aufweisen, wobei die untere Platte (62) an den hinteren Lenkspindelschubstangen (32) befestigt ist und dass der erste rollenartige Teil (54) zwei übereinander gelagerte Rollen (54a,54b) umfasst, die fähig sind, sich jeweils in den beiden unteren und oberen Nuten (64,65) zu bewegen und dass die obere Platte (63) in Bezug auf die untere Platte (62) durch geeignete Mittel (34b;R1,R2) in versetzter Stellung gehalten wird, damit die obere Rolle (54b)bei Abstützung praktisch ohne Spiel zwischen dem Finger (52a) und einer Seitenwandung der oberen Nut (65) angeordnet ist und damit die untere Roll (54a)bei Abstützung praktisch ohne Spiel zwischen dem Finger (52a) und einer der Seitenwandung der oberen Nut (65) entgegengesetzten Seitenwandung der unteren Nut (64) angeordnet ist, wobei der Aussendurchmesser jeder Rolle (54a,54b) kleiner als die Breite jeder Nut (64,65) ist.

9. Vorrichtung nach Anspruch 8, dadurch gekennzeichnet, dass die vorgenannte zweite Platte (55) aus zwei unteren und oberen übereinander gelagerten Platten (57,58) besteht, die jeweils zwei die Führungsnut (50a) festlegenden unteren und oberen Nuten (59,60) aufweisen, dass der zweite rollenartige Teil (53) zwei übereinander geordnete Rollen (53a,53b) aufweist, die fähig sind, sich jeweils in den beiden unteren und oberen Nuten (59,60) zu bewegen und dass die beiden unteren und oberen Platten (57,58) in Bezug auf einander in versetzter Stellung durch geeignete Mittel, wie Befestigungsschrauben (34b) unbeweglich gehalten werden, derart, dass die obere Rolle (53b) bei Abstützung praktisch ohne Spiel zwischen dem Finger (52a) und einer Seitenwandung der oberen Nut (60) angeordnet ist und dass die untere Rolle (53a) bei Abstützung praktisch ohne Spiel zwischen dem Finger (52a) und einer Seitenwandung der oberen Nut (60) angeordnet ist, wobei der Aussendurchmesser jeder Rolle (53a,53b) kleiner als die Breite jeder Nut (59,60) ist.

10. Vorrichtung nach Anspruch 8, dadurch gekennzeichnet, dass die vorgenannten geeigneten Mittel zum Halten der oberen Platte (63) in Bezug auf die untere Platte (62) vorzugsweise durch Befestigungsschrauben (34b) gebildet sind, die auch die obere Platte (63) mit den hinteren Lenkspindelschubstangen (32) nach Anlegung an den unteren und oberen Platten (62,63) von entgegengesetzten, senkrecht zur Uebertragungswelle (10) verlaufenden und durch die Achse des vorgenannten Fingers (52a) führenden Kräften fest verbinden, um die vorgenannte Versetzung der oberen Platte (63) gegenüber der unteren Platte (62) zu erlangen.

11. Vorrichtung nach Anspruch 9, dadurch gekennzeichnet, dass die beiden unteren und oberen Platten (57,58) der zweiten vorgenannten Platte (55) miteinander und mit dem Gehäuse (16) des Hinterlenkungsmechanismus (11) nach Anlegung an diese von entgegengesezten und senkrecht zur Uebertragungswelle (10) verlaufenden und durch die Achse des Fingers (52a) führenden Kräften fest verbunden sind, um die vorgenannte Versetzung der oberen Platte (58) gegenüber der unteren Platte (57) zu erzielen.

12. Vorrichtung nach Anspruch 8, dadurch gekennzeichnet, dass die Platte (63) der ersten vorgenannten Platte (31) frei gleitend in geführter Weise in dem Gehäuse (16) des Hinterlenkungsmechanismus (11) zwischen der unteren Platte (57) der zweiten Platte (55) und der unteren Platte (62) der ersten Platte (31) angeordnet ist und dass die vorgenannten Mittel um die untere Platte (63) der ersten Platte (31) in versetzter Stellung gegenüber der unteren Platte (62) zu halten zwei gleichartige, vorgespannte Druckfedern (R1,R2) aufweisen, die einerseits beiderseits der Achse (X-X') der hinteren Lenkspindelschubstangen (32) in derselben Entfernung von dieser Achse und andererseits beiderseits der Uebertragungswelle in derselben Entfernung von dieser angeordnet sind und jeweils in im Gleichgewicht gehaltener Weise in zwei jeweils in den oberen und unteren Platten (62,63) gebildeten, eine Einsenkung bildenden komplementären Aussparungen (62c,63c) untergebracht sind, wobei sie sich mit ihren beiden Endwindungen jeweils an der entsprechenden Endwandung der Aussparung (63c) der oberen Platte (63) und an einer entsprechenden, der Endwandung der Aussparung (63c) entgegengesetzten Endwandung der Aussparung (62c) abstützen, um ständig senkrecht zur Uebertragungswelle (10) verlaufende und durch die Achse des Fingers (52a) führende Kräfte auszuüben, um die oberen und unteren Platten (63,62) in Bezug auf einander versetzt zu halten.

13. Vorrichtung nach einem der Ansprüche 8 bis 12, dadurch gekennzeichnet, dass die untere Platte (62) zwei unterhalb derselben fest verbundene Schulter (62a,62b) aufweist, an welchen sich jeweils die beiden freien Enden der beiden hinteren Lenkspindelschubstangen (32) abstützen und an diese letzteren vorzugsweise durch Befestigungsschrauben (34a) befestigt ist.

14. Vorrichtung nach Anspruch 9 oder 11, dadurch gekennzeichnet, dass die beiden Platten (57,58) der zweiten vorgenannten Platte (55) mit dem Gehäuse (16) des Hinterlenkungsmechanismus (11) durch die vorgenannten Befestigungsschrauben (56) fest verbunden sind.

15. Mit einer Vorrichtung nach einem der Ansprüche 1 bis 14 ausgerüstetes Kraftfahrzeug.
